# EUROPEAN PATENT APPLICATION

(11) **EP 4 101 817 A1**
(43) Date of publication of application: **14.12.2022**
(21) Application number: 21305802.7
(22) Date of filing: 11.06.2021
(51) Int. Cl.: C01G 23/00, C08G 63/85

(54) **NEW TITANIUM CATALYST FOR THE POLYESTER MANUFACTURING PROCESS**

(71) Applicant: Clariant International Ltd, 4132 Muttenz (CH)
(72) Inventor: STEFFANUT, Pascal, 68128 Rosenau (FR); BELLEMIN LAPONNAZ, Stéphane, 67100 Strasbourg (FR); EGLY, Julien, 67000 Strasbourg (FR)
(74) Representative: Jacobi, Carola

(57) **Abstract**

The invention relates to a new titanium catalyst having the following formulae (I) or (II) 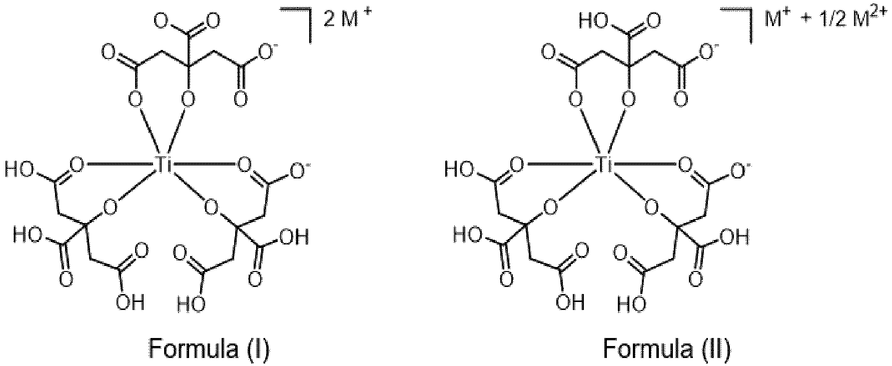 wherein M is an organic and/or metallic cationic counter ion.

## Description

### FIELD OF INVENTION

This invention relates to the use of novel anionic titanium based citric acids complexed to organic or metallic cations as new catalysts for the polyester manufacturing processes. More particularly, the present invention relates to systems comprising anionic titanium based citric acids complexed to organic or metallic cations for the preparation of polyester resins, fibre, filaments and yarn, that reduce the polymerization time at all stages of polymer synthesis and reduces the generation of degradation products responsible for the yellowing of the final resin. This invention further relates to a process for the preparation of polyester resin using said catalyst.

US 4,356,299 [Rohm and Hass, 02/04/1982] relates the use of hybrid catalytic system of titanium and antimony compounds. The achieved viscosity in the melt is approximately 0.6 dL/g with an increase of the rate of polymerization than usual antimony catalyst while avoiding the yellow coloration with titanium compounds.

US 2012/0088898 A1 describes a catalyst formulation which is free of heavy metals and has good colours and low acetaldehyde contents, based on a mixture of titanium compounds, co-catalyst as alkali/alkaline earth metallic salts, blue toner and phosphorus compounds. The achieve viscosities in the melt are indicated at least at 0.70 dL/g.

WO 2009118600 A2 patent application [Equipolymers Gmbh, 01/10/2009] claims the use of titanium antrane catalyst for polyester polymerization with phosphoric acid as stabilizer. The achieved viscosity is 0.59 dL/g and a Solid State Polymerization (SSP) is necessary to increase the molecular weight.

US 2016/0108068 relates to a method for the production of a titanium containing catalyst by reacting titanium-(IV)-alkoxide of high purity with an alpha-hydroxy carboxylic acid. The catalysts are used for the production of high viscosity polyesters with a high thermal stability.

US 2012/0271030 refers to a catalyst composition comprising the reaction product of an alkoxide of a metal M (M= Ti, Zr, Hf, Al or lanthanide) an alcohol and a base. The composition is useful for the production of polyesters, such as polyethylene terephthalate, polytrimethylene terephthalate and polybutylene terephthalate.

### BACKGROUND OF THE INVENTION

Polyesters such as, for example, polyethylene terephthalate, polytrimethylene terephthalate and polybutylene terephthalate, are a class of important industrial polymers, used in large quantities in the manufacture of textile fibres, packaging films and containers. Polyesters are usually produced by a catalysed two-stage reaction. In the first stage, esterification reaction (DE) is carried out between a dicarboxylic acid and a polyol. The esterification reaction is then followed by a polycondensation step at higher temperatures resulting in the polyester resin formation. Antimony and titanium complexes, in the form of alcoholic solutions, are frequently used as catalysts in the polyester process with, in some cases, certain drawbacks in reactivity, stability, appearance of the final polymers.

The invention relates to novel anionic titanium based citric acids complexed to organic or metallic cations compounds that, surprisingly, increase the polycondensation speed for the polyester manufacturing and reduce the yellowing of the final polymer.

It is now well known in the state-of-the-art that citric titanium complexes can catalyse the polyester polymerization. These products are commercially available and have been reported in several patent applications.

These catalysts show good activities but must be combined with either metallic salt cocatalysts or phosphorus-based compounds to improve the final appearance on the polyester. Moreover the synthesis of the catalyst systems involves several reaction steps and is complex and time-consuming..

Therefore, there is still an increasing need for implementing new catalyst systems, obviously soluble in polyols that are more efficient for producing polyesters, for instance increase the speed of the polymerization and lead to polyesters with reduced coloration/yellowing.

Unexpectedly, it was found that citric titanium complexes combining different counter ions in the molecule, such as organic cations or metallic cations have a better impact on the catalyst activity versus the current commercial citric acid based catalysts and act efficiently and differently in the polyester manufacturing process.

### SUMMARY OF THE INVENTION

The invention relates to new catalysts having the following formulae (I) or (II) 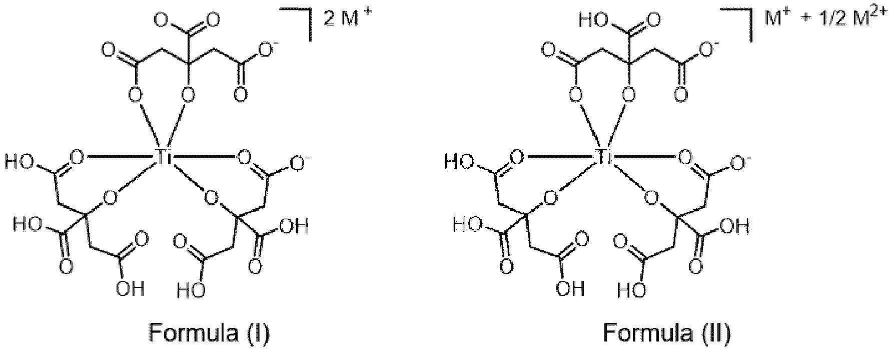 wherein M is an organic and/or metallic cationic counter ion.

### DETAILED DESCRIPTION OF THE INVENTION

The titanium compounds of formulae (I) or (II) comprise citric acid compounds as main ligand and an organic and/or metallic cationic counter ions.

These compounds can be synthesized by reacting citric acid, metal salts and organic salts with a titanium chloride or titanium alkoxyde precursor.

More preferred metallic cationic compounds are selected from the following metals: Li, Na, Mg, K, Ca, Zn, Co.

Another also preferred organic or metallic cationic compound is selected from the formulae (III) 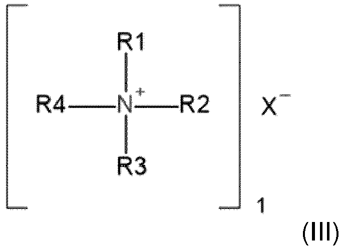 wherein
- R1, R2, R3, R4: independently from each other denote H, C₁-C₁₂-alkyl, C₆-C₁₈-aryl, C₇-C₁₈-arylalkyl or C₇-C₁₈-alkylaryl; particularly preferred R1, R2, R3 denotes H, C₁-C₁₂-alkyl and R4 denotes C₇-C₁₈-arylalkyl (for example benzylammonium).
- X⁻: stands for a chloride, bromide, fluoride, iodide, hydroxide, sulfate, nitrate anion

In a preferred embodiment formula (III) stands for tetramethylammonium, benzyltrimethylammonium,.

Suitable salts that can be employed as precursor for the metallic or organic cationic compounds are for instance: TiCl₂O for the preparation of titanium oxalates or titanium citrates. Moreover, TiCl₃OEt and Ti(SO₄)₂ are suitable precursors as well.

The catalysts of the present invention can be produced by introducing citric acid, the organic and/or metallic cationic compound and the titanium chloride and/or alkoxyde precursor in a suitable solvent.

Surprisingly suitable solvents are for instance water or a mixture of water and another solvent, like ethers, like THF or alcohols, like ethanol or isopropanol to name only a few examples. Ketones and esters are less preferred because they might react with the titanium precursor..

The mixing can be carried out under air at a temperature in the range from 0 to 100°C, preferably in the range from 0 to 50°C, stirring the two components together.

The quantities of individual components generally can be such that the molar ratio of each component to titanium in the catalyst composition produced is within the range disclosed below.

The molar ratio of the organic or metallic salt compounds (III) to titanium depends on the titanium precursor and is range from 0:1 to 8:1, preferably from 0.25:1 to 4:1, in particular preferred in the range from 0.5:1 to 1:1.

Depending on the titanium precursors employed the reaction proceed as follows:
Reaction with titanium tetraisoproxide as precursor: molar ratio 1:3 (titanium precursor: citric acid) 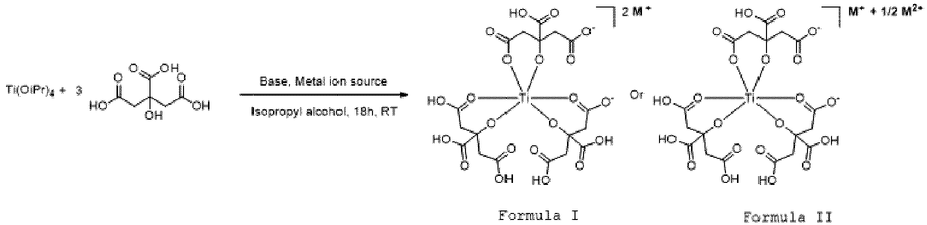
Reaction with titanium alkoxy trichloride as precursor molar ratio 1:3 (titanium precursor: citric acid)

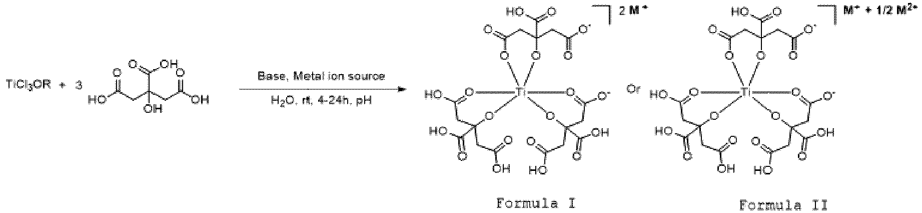

The advantage of the instant process is that the residue of a Ziegler Natta catalyst by-product can be used as precursor. Moreover, in contrary to the processes known in the prior art the titanium complex can be synthesized directly from the titanium alkoxy trichloride precursor without the further reaction step of substituting the alkyl groups from titanium butoxide.

The activity of the instant catalysts is higher than of the titanium catalysts known in the prior art and allows to produce polyesters with less yellowing.

The present invention also relates to the use of the instant novel catalyst of formula (I) and/or (II) for catalysing the esterification and polymerisation step in a process for the preparation of a polyester.

The esterification step comprises esterifying at least one dicarboxylic acid or mono-ester thereof or di-ester thereof (transesterification) and at least one diol or polyol at temperatures in the range of preferably 250 to 290°C to obtain an esterified mixture (so called later on direct esterification DE).

The polymerisation step comprises melt polymerizing the esterified mixture at temperatures in the range of 240 to 320°C, preferably 260 to 300°C to obtain a polyester (so called later, polycondensation PC).

Any carboxyl compound, which when combined with an alcohol, can produce an ester or polyester can be used. Generally, such carboxyl compounds include, but are not limited to, acids, esters, amides, acid anhydrides, acid halides, salts of carboxylic acid oligomers or polymers having repeating units derived from an acid, or combinations of two or more thereof. A process for producing an ester or polyester comprises contacting a reaction medium with a catalyst composition disclosed above in the first embodiment of the invention. The reaction medium can comprise, consist essentially of, or consist of an alcohol and either an organic acid, a salt thereof, an ester thereof, or an oligomer having repeating units derived from a dicarboxylic acid, or combinations thereof.

Preferably an organic bifunctional acid has the formula of HO₂C-A-CO₂H in which A is an alkylene group, an arylene group, alkenylene group, or combinations of two or more thereof, wherein each A has 0 to 30, preferably 1 to 25, more preferably 4 to 20, most preferred 4 to 15 carbon atoms. During the polymerization reaction, mono carboxylic acids may be used as termination agents for the polymer chain. Their role is to modify the technical behaviour of the obtained polyester, change its overall properties or introduce a new functionality. Examples of suitable organic monoacids include, but are not limited to, terephthalic acid, isophthalic acid, naphthalic acid, succinic acid, adipic acid, phthalic acid, glutaric acid, acrylic acid), oxalic acid, benzoic acid, maleic acid, propenoic acid, and combinations of two or more thereof.

Polymerization may also be performed via a trans-esterification reaction. In this case, preferred esters, to be used as starting material, include the methyl esters of the before mentioned organic acids, for example dimethyl adipate, dimethyl phthalate, dimethyl terephthalate, dimethyl glutarate, and combinations of two or more thereof.

Any alcohol that can esterify an acid to produce an ester or polyester can be used in the present invention. Examples of suitable alcohols include, but are not limited to ethylene glycol, propylene glycol, isopropylene glycol, butylene glycol, 1-methyl propylene glycol, pentylene glycol, diethylene glycol, triethylene glycol, 1,6-hexanediol, cyclohexyl-1,4-bismethanol and combinations of two or more thereof.

An oligomer can have a total of 1 to 100, preferably 1 to 50, in particular preferred 2 to 10 repeating units derived from a carboxyl compound and alcohol.

Suitable conditions to effect the production of an ester or polyester can include a temperature in the range of from about 150°C to about 500°C, preferably about 200°C to about 400°C, and most preferably 250°C to 300°C under a pressure in the range of from about 0.001 to about 1 atmosphere for a time period of from about 0.2 to about 20, preferably about 0.2 to about 15, and most preferably 0.5 to 10 hours.

The molar ratio of the alcohol to carboxyl compound can be any ratio so long as the ratio can affect the production of an ester or polyester. Generally the ratio can be in the range of from about 1:1 to about 10:1, or about 1:1 to about 5:1, or 1:1 to 4:1.

The catalysts of the present invention can be used at level between 0.5 to 2000 ppm, preferably 1 to 1000 ppm of titanium metal equivalent relative to the reaction medium comprising carboxyl compound and alcohol.

The catalysts of the present invention are preferably used at level between 1 to 150 ppm of titanium metal equivalent relative to the reaction medium comprising carboxyl compound and alcohol.

Other ingredients such as conventional esterification and trans-esterification co-catalysts (EP3000835A1) may be introduced to the production process with, or following, introduction of the catalyst of the present invention.

It was found that the present catalyst of formula (I) or (II) significantly accelerates the direct esterification step as well as the polycondensation step. Therefore, it's possible and a great advantage to introduce these catalysts already in the DE step and simplify the process setup.

### EXAMPLES

### Synthesis of the catalysts of formula (I) and (II)

### Catalyst Ia

Citric acid (2.88 g, 15 mmol) was dissolved in ice-cold isopropanol (10 mL) in a 50 millilitres round bottom flask equipped with a magnetic stirrer. To the stirred solution, titanium isopropoxide (1.42 g, 5 mmol) was slowly added. The mixture was stirred for one hour at 0°C. Lithium hydroxide monohydrate (0.420 g, 10 mmol) was added and the mixture was stirred overnight at 25°C. All volatiles were removed under vacuum. The white precipitate was dried under vacuum at 100°C. The product was a white powder with quantitative yield (3.38 g).

Anal. Calculated for Ti(Cit)3Li2 . 3/2 isopropanol. 5/2 H2O: C, 35.22; H, 4.60. Found: C, 35.33; H, 4.37.

1H NMR (500 MHz, D2O), 2.62 (d, J = 14.5 Hz, 6H), 2.89 (d, J = 14.5 Hz, 6H) ppm 13C NMR (125 MHz, D2O) 42.82, 88.26, 173.75, 185.86 ppm

### Catalyst Ib

Citric acid (2.88 g, 15 mmol) was dissolved in ice-cold isopropanol (10 mL) in a 50 millilitres round bottom flask equipped with a magnetic stirrer. To the stirred solution, titanium isopropoxide (1.42 g, 5 mmol) was slowly added. The mixture was stirred for one hour at 0°C. Sodium hydroxide (0.400 g, 10 mmol) was added and the mixture was stirred overnight at 25°C. All volatiles were removed under vacuum. The white precipitate was dried under vacuum at 100°C. The product was a white powder with quantitative yield (3.24 g).

Anal. Calculated for Ti(Cit)3Na2 . 1 isopropanol. 3/2 H2O: C, 33.57; H, 3.89. Found: C, 33.53; H, 4.03.

1H NMR (500 MHz, D2O), 2.73 (d, J = 14.9 Hz, 6H), 3.00 (d, J = 14.9 Hz, 6H) ppm 13C NMR (125 MHz, D2O), 43.29, 88.29, 173.73, 185.90 ppm

### Catalyst Ic

Citric acid (2.88 g, 15 mmol) was dissolved in water (10 mL) at 0°C in a 50 mL round-bottom flask equipped with a magnetic stirrer. To the stirred solution, titanium trichloride ethoxide (so-called TICET) (0.996 g, 5 mmol) was slowly added by portions. The mixture was stirred for one hour at 0°C. The pH was adjusted from 1 to 2 by dropwise addition of an aqueous solution of potassium hydroxide 3 N. The mixture was stirred overnight at room temperature thus giving a white precipitate. The solid was filtered, washed with cold distillate water (5 mL) and dried under vacuum at 100°C. The product was a white powder with 52% yield (1.83 g).

Anal. Calculated for Ti(Cit)3K2 . 1/2 H2O: C, 30.65; H, 2.72; Found: C, 30.69; H, 2.89.

1H NMR (500 MHz, D2O), 2.66 (d, J = 13.5 Hz, 6H), 2.91 (d, J = 13.5 Hz, 6H) ppm 13C NMR (125 MHz, D2O) 43.51, 88,35, 173,75, 186,00 ppm

### Catalyst Id

Citric acid (2.88 g, 15 mmol) was dissolved in ice-cold isopropanol (10 mL) in a 50 millilitres round bottom flask equipped with a magnetic stirrer. To the stirred solution, titanium isopropoxide (1.42 g, 5 mmol) was slowly added. The mixture was stirred for one hour at 0°C. Sodium hydroxide (0.400 g, 10 mmol) was added and the mixture was stirred overnight at 25°C. All volatiles were removed under vacuum. The white precipitate was dried under vacuum at 100°C. The product was a white powder with quantitative yield (3.63 g)

Anal. Calculated for [Ti(Cit)3(NMe4)2]: C, 40.74; H, 5.52 ; N, 3.65. Found: C, 39.81; H, 5.74; N, 3.59

1H NMR (500 MHz, D2O) ppm, 2.70 (d, J = 15.7 Hz, 6H), 2.97 (d, J = 15.7 Hz, 6H), 3.14 (s, 24H) ppm

13C NMR (125 MHz, D2O) 43.36, 55.26, 88.27, 173.79, 186.00 ppm

### Catalyst Ie

Citric acid (2.88 g, 15 mmol) was dissolved in ice-cold isopropanol (10 mL) in a 50 millilitres round bottom flask equipped with a magnetic stirrer. To the stirred solution, titanium isopropoxide (1.42 g, 5 mmol) was slowly added. The mixture was stirred for one hour at 0°C. Benzyltrimethylammonium hydroxide (1.673 g, 10 mmol) was added and the mixture was stirred overnight at 25°C. All volatiles were removed under vacuum. The white precipitate was dried under vacuum at 100°C. The product was a white powder with quantitative yield (4.21 g)

Anal. Calculated for [Ti(Cit)3(NBnMe3)2]: C, 49.68; H, 5.49 ; N, 3.05. Found: C, 49.84; H, 6.10; N, 2.89

1H NMR (500 MHz, D2O) ppm, 2.70 (d, J = 15.7 Hz, 6H), 2.97 (d, J = 15.7 Hz, 6H), 2.98 (s, 18H), 4.46 (s, 4H), 7.43 (m, 10H)ppm

13C NMR (125 MHz, D2O) 43.36, 52.33, 88.27, 127.35, 129,13, 130.770, 132.75, 173.79, 186.00 ppm

### Catalyst If

Citric acid (2.88 g, 15 mmol) was dissolved in ice-cold isopropanol (10 mL) in a 50 millilitres round bottom flask equipped with a magnetic stirrer. To the stirred solution, titanium isopropoxide (1.42 g, 5 mmol) was slowly added. The mixture was stirred for one hour at 0°C. Tetrabutylammonium hydroxide (1.673 g, 10 mmol) was added and the mixture was stirred overnight at 25°C. All volatiles were removed under vacuum. The white precipitate was dried under vacuum at 100°C. The product was a white powder with quantitative yield (5.50 g)

Anal. Calculated for [Ti(Cit)3(NBu4)2]: C, 51.92; H, 8.05 ; N, 3.95. Found: C, 51.52; H, 8.35; N, 3.95

¹H NMR (500 MHz, D₂O, 20°C): δ 0.95 (t, *J* = 7.5 Hz 24H), 1.24 (m, 16H), 1.68 (m, 16H), 2.68 (d, *J* = 13.5 Hz, 6H), 2.96 (d, *J* = 13.5 Hz, 6H), 3.12 (d, 16H) ppm.

¹³C NMR (125 MHz, D₂O, 20°C): δ 14.02, 19,96, 22.51, 43.51, 59.32, 88.35, 173.75, 186.00 ppm.

### Catalyst IIa

Citric acid (2.88 g, 15 mmol) was dissolved in ice-cold isopropanol (10 mL) in 50 millilitres round bottom flask equipped with a magnetic stirrer. To the stirred solution, titanium isopropoxide (1.42 g, 5 mmol) was slowly added. The mixture was stirred for one hour at 0°C. Zinc basic (0.274 g, 0.5 mmol) was added and the solution was stirred for one hour. Sodium hydroxide monohydrate (0.210 g, 5 mmol) was added and the mixture was stirred overnight at 25°C. All volatiles were removed under vacuum. The white precipitate was dried under vacuum at 100°C. The product was a white powder with quantitative yield (3.28 g).

Anal. Calculated for [Ti(Cit)3Li]2Zn . 4 H2O: C, 31.16; H, 3.20. Found: C, 31.25; H, 3.19.

1H NMR (500 MHz, D2O) ppm, 2.64 (d, J = 15.4 Hz, 6H), 2.89 (d, J = 15.4 Hz, 6H), 3.14 (s, 24H) ppm

13C NMR (125 MHz, D2O) 43.41, 55.26, 88.34, 174.58, 185.92 ppm

### Catalyst IIb

### Citric acid (2.88 g, 15 mmol) was dissolved in ice-cold isopropanol (10 mL) in

50 millilitres round bottom flask equipped with a magnetic stirrer. To the stirred solution, titanium isopropoxide (1.42 g, 5 mmol) was slowly added. The mixture was stirred for one hour at 0°C. Zinc basic (0.274 g, 0.5 mmol) was added and the solution was stirred for one hour. Sodium hydroxide (0.200 g, 5 mmol) was added and the mixture was stirred overnight at 25°C. All volatiles were removed under vacuum. The white precipitate was dried under vacuum at 100°C. The product was a white powder with quantitative yield (3.35 g)

Anal. Calculated for [Ti(Cit)3Na]2Zn . 4 H2O: C, 31.16; H, 3.20. Found: C, 31.25; H, 3.19.

1H NMR (500 MHz, D2O) ppm, 2.64 (d, J = 15.4 Hz, 6H), 2.89 (d, J = 15.4 Hz, 6H), 3.14 (s, 24H) ppm

13C NMR (125 MHz, D2O) 43.41, 55.26, 88.34, 174.58, 185.92 ppm

### Catalyst IIc

Citric acid (2.88 g, 15 mmol) was dissolved in water (10 mL) at 0°C in a 50 mL round-bottom flask equipped with a magnetic stirrer. To the stirred solution, titanium trichloride ethoxide TICET (0.996 g, 5 mmol) was slowly added by portions. The mixture was stirred for one hour at 0°C. Zinc basic (0.274 g,

0.5 mmol) was added and the solution was stirred for one hour. The pH was adjusted from 1 to 2 by dropwise addition of an aqueous solution of potassium hydroxide 3 N. The mixture was stirred overnight at room temperature thus giving a white precipitate. The solid was filtered, washed with cold distillate water (5 mL) and dried under vacuum at 100°C. The product was a white powder with 55% yield (1.91 g).

Anal. Calculated for [Ti(Cit)3K]2Zn . H2O: C, 30.93; H, 2.74. Found: C, 30.73; H, 2.69.

1H NMR (500 MHz, D2O) ppm, 2.70 (d, J = 14.4 Hz, 6H), 2.95 (d, J = 14.4 Hz, 6H) ppm

13C NMR (125 MHz, D2O) 43.36, 88,34, 173,76, 185,98 ppm

### Catalyst lid

Citric acid (2.88 g, 15 mmol) was dissolved in ice-cold distillate water (10 mL) in a 50 millilitres round bottom flask equipped with a magnetic stirrer. To the stirred solution, titanium trichloride ethoxide TICET (0.996 g, 5 mmol) was slowly added. The mixture was stirred for one hour at 0°C. Zinc basic (0.274 g, 0.5 mmol) was added and the solution was stirred for one hour. The pH was adjusted from 1 to 2 with a dropwise addition of ammonium hydroxide (27%-30% in water). The mixture was stirred overnight at 25°C. The resulting white precipitate was filtered, washed with cold distillate water (5 mL). The white precipitate was dried under vacuum at 100°C. The product was a white powder with 53% yield (1.87 g)

Anal. Calculated for [Ti(Cit)3(NH4)]2Zn . 4 H2O: C, 30.67; H, 3.72; N, 1.99. Found: C, 30.75; H, 3.89; N, 2.15

1H NMR (500 MHz, D2O) ppm, 2.62 (d, J = 15.4 Hz, 6H), 2.88 (d, J = 15.4 Hz, 6H) ppm

13C NMR (125 MHz, D2O) 43.34, 88.37, 173.80, 185.88 ppm

### Catalyst lie

Citric acid (2.88 g, 15 mmol) was dissolved in water (10 mL) at 0°C in a 50 mL round-bottom flask equipped with a magnetic stirrer. To the stirred solution, titanium trichloride ethoxide TICET (0.996 g, 5 mmol) was slowly added by portions. The mixture was stirred for one hour at 0°C. Anhydrous magnesium sulfate (0.300 g, 2.5 mmol) was added and the solution was stirred for one hour The pH was adjusted from 1 to 2 by dropwise addition of an aqueous solution of potassium hydroxide 3 N. The mixture was stirred overnight at room temperature thus giving a white precipitate. The solid was filtered, washed with cold distillate water (5 mL) and dried under vacuum at 100°C. The product was a white powder with 65% yield (2.32 g).

Anal. Calculated for [Ti(Cit)3K]2Mg . 5 H2O: C, 30.26; H, 3.24. Found: C, 30.26; H, 3.23.

1H NMR (500 MHz, D2O) ppm, 2.71 (d, J = 13.9 Hz, 6H), 2.96 (d, J = 13.9 Hz, 6H) ppm

13C NMR (125 MHz, D2O) 43.34, 88,33, 173,77, 185,98 ppm

### Catalyst IIf

Citric acid (2.88 g, 15 mmol) was dissolved in water (10 mL) at 0°C in a 50 mL round-bottom flask equipped with a magnetic stirrer. To the stirred solution, titanium trichloride ethoxide TICET (0.996 g, 5 mmol) was slowly added by portions. The mixture was stirred for one hour at 0°C. Calcium carbonate (0.250 g, 2.5 mmol) was added and the solution was stirred for one hour The pH was adjusted from 1 to 2 by dropwise addition of an aqueous solution of potassium hydroxide 3 N. The mixture was stirred overnight at room temperature thus giving a white precipitate. The solid was filtered, washed with cold distillate water (5 mL) and dried under vacuum at 100°C. The product was a white powder with 40% yield (1.42 g).

Anal. Calculated for [Ti(Cit)3K]2Ca . 3 H2O: C, 30.69; H, 3.01. Found: C, 30.75; H, 3.14.

1H NMR (500 MHz, D2O) ppm, 2.71 (d, J = 13.9 Hz, 6H), 2.96 (d, J = 13.9 Hz, 6H) ppm

13C NMR (125 MHz, D2O) 43.34, 88.33, 173.77, 185,98 ppm

### Catalyst IIg

Citric acid (2.88 g, 15 mmol) was dissolved in ice-cold isopropanol (10 mL) in 50 millilitres round bottom flask equipped with a magnetic stirrer. To the stirred solution, titanium isopropoxide (1.42 g, 5 mmol) was slowly added. The mixture was stirred for one hour at 0°C. Zinc basic (0.274 g, 0.5 mmol) was added and the solution was stirred for one hour. Benzyltrimethylammonium hydroxide (0.836 g, 5 mmol) was added and the mixture was stirred overnight at 25°C. All volatiles were removed under vacuum. The white precipitate was dried under vacuum at 100°C. The product was a white powder with quantitative yield (4.00 g).

Anal. Calculated for [Ti(Cit)3(NBnMe3]2Zn: C, 41.93; H, 4.40 ; N, 1.75. Found: C, 41.32; H, 4.72; N, 1.65

1H NMR (500 MHz, D2O) ppm, 2.65 (d, J = 15.3 Hz, 6H), 2.92 (d, J = 15.3 Hz, 6H), 2.96 (s, 9H), 4.43 (s, 2H), 7.40 (m, 5H) ppm

13C NMR (125 MHz, D2O) 43.36, 52.33, 88.27, 127.35, 129,13, 130.770, 132.75, 173.79, 186.00 ppm

### Polymerization examples 1 to 6 (Table 1):

Commercially available polyesterification catalysts were evaluated against the new catalysts of formula (I) and (II). Most representative ones were selected from the market and are titanium tetra n-butoxide (TiBo), Tyzor PC 64, Vertec AC 422, Vertec AC 436.

### Direct esterification step

The catalyst of formula (I) or (II) were added into 50 g of ethylene glycol. The solution was stirred for 10 minutes at 25°C and introduced into a kettle provided with a Jiffy Mixer agitator rotating at 40 rpm, a thermocouple, condenser and nitrogen sweep. 115 ml of ethylene glycol, and 400 g of terephthalic acid.

The agitator was turned on and the temperature increased to 275°C over a period of about 2.5 hours. The contents were esterified by holding under agitation at 275°C and a pressure of 120 mm Hg, and at 280°C and a pressure of 30 mm Hg.

### Polycondensation step

The contents of the kettle were held under agitation at 285°C at 1 to 2 mm Hg pressure for a time sufficient to reach 15 ounce-inch (0.106 Newton-meter) torque as measured by an Electro-Craft Motomatic torque controller. The time for this step was recorded as the Finish Time, and varied with the catalyst used. The polymer melt was then poured into a water bath to solidify the melt, and the resultant solid annealed at IS0°C for 12 hours and ground to pass through a 2 mm filter for color measurements using the previously described spectrophotometer.

### Polymerization examples 1 to 19 (Table 2):

Commercially available polyesterification catalysts were evaluated against the new catalysts of formula (I) and (II). Most representative ones were selected from the market and are titanium tetra n-butoxide (Ti(OBu)₄), Tyzor PC 64, Tyzor AC 422, Tyzor AC 436.

For all the PET synthesis trials, only one catalyst is introduced either during the first or the second polymerization stage.

### Direct esterification step (DE)

During the first step, the synthesis recipe of the PET consists of mixing a diol (ethylene glycol, EG) and a diacid (terephthalic acid, AT) in a molar ratio of EG/AT equal to 1.2. If the catalyst is added at this first stage, it is then solubilized in 30 ml of EG at the temperature "Ts". Before heating the reactor, the catalyst is introduced under nitrogen via a suitable system.

The reactor is heated to 275°C is the esterification temperature. The rising of water vapour at the top of the distillation column indicates the beginning of the esterification.

the water extraction (by-product) is continuous firstly under pressure step, 6.6 bar of nitrogen during 40-50 min, then during 20 min decompression to atmospheric pressure, and finally until the disappearance of water steam by the fall of the temperature at the top of the column below 100°C which lasts between 20 to 35 min.

During this last esterification step, the polycondensation catalyst (second stage) is introduced at this time before the start of the vacuum ramp.

### Polycondensation step

During this step, the PET oligomers will be polycondensed according to the trans-esterification reaction. The thermodynamic equilibrium is maintained towards the coupling reaction by the continuous of elimination of ethylene glycol (by-product).

The contents of the kettle were held under agitation at 285°C at 1 to 2 mm Hg pressure for a time sufficient to reach 15 ounce-inch (0.106 Newton-meter) torque as measured by an Electro-Craft Motomatic torque controller. The time for this step was recorded as the Finish Time, and varied with the catalyst used. The polymer melt was then poured into a water bath to solidify the melt, and the resultant solid is directly ground and dried for 15 hours at ambient temperature. The granules of PET will be analysed and characterized.

Six experimental techniques are used to determine properties of PET. The details of the first three techniques as well as the calculation of the parameters are summarized in patent WO 2016/045923, which is incorporated hereby by reference, the details of the three other techniques are given below:
1. Intrinsic viscosity ([η]; dL/g) determined by Capillary viscosimetry analysis (method ASTM D4603).
2. The Rate of Diethylene Glycol (RDEG; mol%/unit of PET) is quantified by Nuclear Magnetic Resonance Spectroscopy (1H-NMR).
3. Thermal properties of PET analysed by Differential scanning calorimetry (DSC): from the first heating ramp we determine the cold-crystallization temperatura (Tc1),melting temperatura (Tm1) and the degree of crystallization (χ_{c1}). From the cooling ramp we find the melt crystallization temperature (Tc2). From the second heating ramp we determine the glass transition temperature (Tg), the cold-crystallization temperature (Tc3), the degree of crystallization (χ_{c3}) and the melting temperature (Tm3).
4. Determination of acid end-functions ([COOH], meq/kg of PET) by titration. The method consists in reacting the PET acid end-functions with a known molar number (N_{B}) of base solution. The unreacted amount of base (N_{B}-unreacted) is subsequently dosed with an acid solution. The molar number of PET end-function [COOH]= N_{B}-N_{B-unreacted}.
5. Determination of average molar masse by number (Mn), by weight (Mw) and polymolecularity index (Ip): Gel Permeation Chromatography (GPC) was used to measure the molar mass distribution of PET samples. GPC was performed in Hexafluoroisopropanol (HFIP) as the eluent, using a Waters Acquity Advanced Polymer Chromatography (APC) pomp (p-Isocratic Solvent Manager), autosample injector (Sample Manager pFTN), Columns APC XT in Column Manager-S and differential refractive index (RI) detector (Waters RI detector). Column calibration was performed using a set of PMMA standards. The sample solutions in HFIP were prepared 1 day at 25°C prior to the measurement in order to obtain a good solubility. The PET concentration is equal to 5 to 10 g/L. Sample solutions were filtered through 45µm porous PTFE membranes prior to measurement. GPC analyzes made it possible to determine the average molar mass (Mn), (Mw) in PMMA equivalents. Thus one can access the polymolecularity index (Ip= Mn/Mw).
6. Determination of PET color parameters L*a*b* by colorimetry: The colorings of the PET granules are determined according to the CIE Lab system (International Commission of Lighting). The three staining parameters (L* a*, b*) form a coordinate system of a particular color. Each of the parameters explores areas of colorations defined as follows:
   - The luminance L* is between 0 and 100, 0 being black and 100 being white.
   - The parameter a* characterizes the red color if a*> 0 and the green color if a* < 0.
   - The parameter b* characterizes the yellow color if b* > 0 and the blue color if b* < 0
   The coloration of the polymer was measured on PET granules by Konika Minolta CM-S100w spectrophotometer (Observation angle 10°, Illumination D65).

### Results

**Table 1: Polymerisation results obtained only with titanium-based catalysts (no co-catalysts) (antimony trioxide is reported also, as benchmark for the coloration).**

| Cat. | sol. In EG | DE | PC | Sum | L | a | b |
|---|---|---|---|---|---|---|---|
| Sb₂O₃ | hot | 105 | 84 | 189 | 71.8 | -2.54 | 11.35 |
| AC 422 | cold | 90 | 90 | 180 | 74.99 | -2.21 | 20.62 |
| AC 436 | cold | 90 | 68 | 158 | 73.95 | -3.48 | 18.25 |
| PC 64 | cold | 90 | 123 | 213 | 77.95 | -2.72 | 11.97 |
| Ia | cold | 90 | 107 | 197 | 73.74 | -2.94 | 16.97 |
| Ib | hot | 90 | 120 | 210 | 72.44 | -2.36 | 16.87 |
| Ic | hot | 90 | 98 | 188 | 74.23 | -1.74 | 17.80 |
| Id | cold | 90 | 95 | 185 | 73.31 | -2.71 | 14.00 |
| Ie | cold | 90 | 94 | 184 | 72.72 | -3.14 | 15.32 |
| IIa | hot | 90 | 93 | 183 | 75.05 | -3.04 | 16.70 |
| IIb | hot | 90 | 103 | 193 | 75.26 | -2.72 | 15.08 |
| IIc | hot | 85 | 85 | 170 | 73.99 | -1.99 | 17.47 |
| IId | cold | 90 | 76 | 166 | 74.70 | -2.96 | 14.99 |
| IIe | cold | 90 | 106 | 196 | 75.43 | -2.73 | 15.79 |
| IIf | hot | 90 | 106 | 196 | 75.18 | -2.61 | 14.89 |
| IIg | hot | 90 | 90 | 180 | 74.18 | -2.21 | 12.52 |

**Table 2: Macromolecular and chemical properties of PET based new and commercial catalysts. Abreviation meq/kg PET: milli-equivalent per kilograms of PET**

| Cat. | IS | [η] (dL/g) | RDEG (mol%/ PET unit) | [COOH] (meq/ kg PET) | Mn (kg/mol) | Ip (Mw/Mn) |
|---|---|---|---|---|---|---|
| Sb₂O₃ | 2 | 0.68 | 3.6 | 22 | 39 | 1.85 |
| AC 422 | 2 | 0.69 | 3.7 | 21 | 42 | 1.78 |
| AC 436 | 2 | 0.71 | 4 | 17 | 41 | 1.82 |
| PC 64 | 2 | 0.69 | 4.1 | 21 | 37 | 1.78 |
| Ia | 2 | 0.72 | 3.4 | 42 | 35 | 1.8 |
| Ib | 2 | 0.72 | 3.2 | 21 | 34 | 1.82 |
| Ic | 2 | 0.71 | 4 | 24 | 37 | 1.76 |
| Id | 2 | 0.72 | 3.5 | 32 | 35 | 1.83 |
| Ie | 2 | 0.72 | 3.8 | 11 | 35 | 1.83 |
| IIa | 2 | 0.7 | 3.9 | 28 | 38 | 1.74 |
| IIb | 2 | 0.71 | 3.9 | 30 | 38 | 1.76 |
| IIc | 2 | 0.71 | 4.1 | 33 | 37 | 1.78 |
| IId | 2 | 0.7 | 4.1 | 28 | 35 | 1.8 |
| IIe | 2 | 0.71 | 4.2 | 38 | 35 | 1.8 |
| IIf | 2 | 0.72 | 4.2 | 33 | 37 | 1.76 |
| IIg | 2 | 0.71 | 3.9 | 25 | 38 | 1.76 |

**Table 3. Thermal properties of PET based new and commercial catalysts. Abbreviation ND: Peak not detected.**

| Cat. | SI | Tg (°C) | Tc1 (°C) | Tm1 (°C) | χ_{c1} (%) | Tc (°C) | Tc3 (°C) | Tm3 (°C) | χ_{c3} (%) |
|---|---|---|---|---|---|---|---|---|---|
| Sb₂O₃ | 2 | 76 | 126 | 243 | 5.1 | 145 | 151 | 242 | 27 |
| AC 422 | 2 | 75 | 143 | 242 | 4.2 | 145 | 151 | 241 | 11 |
| AC 436 | 2 | 74 | 148 | 240 | 1 | 148 | 152 | 239 | 14 |
| PC 64 | 2 | 75 | 148 | 240 | 1 | 145 | 153 | 239 | 9 |
| Ia | 2 | 76 | 145 | 246 | 4.2 | 159 | 140 | 245 | 31 |
| Ib | 2 | 76 | 144 | 246 | 4.2 | 179 | ND | 245 | 35 |
| Ic | 2 | 74 | 150 | 242 | 2.5 | 145 | 146 | 240 | 23 |
| Id | 2 | 72 | 144 | 244 | 1.7 | 180 | ND | 244 | 38 |
| Ie | 2 | 75 | 146 | 243 | 2.5 | 151 | 145 | 241 | 22 |
| IIa | 2 | 75 | 145 | 242 | 2.5 | 155 | ND | 242 | 35 |
| IIb | 2 | 74 | 144 | 242 | 2.5 | 148 | 142 | 241 | 29 |
| IIc | 2 | 74 | 148 | 242 | 1 | 148 | 144 | 240 | 28 |
| IId | 2 | 75 | 146 | 242 | 2.5 | 139 | 148 | 239 | 10 |
| IIe | 2 | 74 | 144 | 241 | 2.5 | 142 | 144 | 239 | 20 |
| IIf | 2 | 74 | 149 | 241 | 1.7 | 140 | 151 | 238 | 8.5 |
| IIg | 2 | 74 | 148 | 242 | 1.7 | 148 | 145 | 240 | 27 |

**Table 4: Polymerisation results with titanium-based catalysts with addition of some cocatalysts reported in EP3000835A1 (add A, Add B, Add C).**

| Cat. | Additive (ppm) | DE | PC | Sum | L | a | b |
|---|---|---|---|---|---|---|---|
| AC 422 | Add A | 85 | 110 | 195 | 76.36 | -2.85 | 14.66 |
| PC 64 | Add A | 90 | 140 | 230 | 76.64 | -2.05 | 9.56 |
| IId | Add A | 90 | 91 | 181 | 75.61 | -2.68 | 12.02 |
| IId | Add B | 85 | 57 | 142 | 72.59 | -2.41 | 13.43 |
| IId | Add C | 85 | 60 | 145 | 72.66 | -2.24 | 12.13 |
| IIg | Add A | 90 | 95 | 185 | 74.28 | -2.66 | 10.73 |
| IIg | Add B | 85 | 59 | 144 | 75.21 | -2.64 | 12.78 |
| IIg | Add C | 85 | 58 | 143 | 75.29 | -2.5 | 12.2 |

## Claims

1. New titanium catalyst having the following formulae (I) or (II) 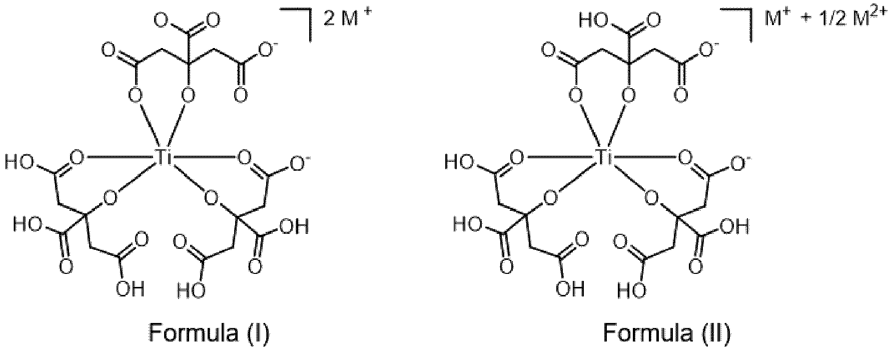 wherein M is an organic and/or metallic cationic counter ion.

2. New titanium catalyst according to claim 1, wherein M of the organic or metallic cationic compound is selected from Li, Na, Mg, K, Ca, Zn, Co.

3. New titanium catalyst according to claim 1, wherein organic or metallic cationic compounds are selected from the formulae (III) 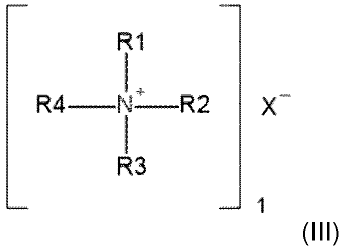 wherein
R1, R2, R3, R4 independently from each other denote H, C₁-C₁₂-alkyl, C₆-C₁₈-aryl, C₇-C₁₈-arylalkyl or C₇-C₁₈-alkylaryl; and
X stands for a chloride, bromide, fluoride, iodide, hydroxide, sulfate, nitrate anion.

4. Process for the preparation of a titanium catalyst according to one or more of claims 1-3, by introducing citric acid, the titanium chloride and/ or alkoxide in a suitable solvent at a temperature in the range from 0 to 100°C.

5. Process according to claim 4, wherein the components are mixed together in a ratio of 0.25 : 1 to 4 : 1 (citric acid : titanium precursor) when titanium tetraisoproxide or titanium alkoxy trichloride is used as a precursor.

6. Use of a titanium catalyst according to one or more of claims 1 to 3 in the esterification or polymerization step in the process for the preparation of a polyester resin.
